Europäisches Patentamt

European Patent Office

Office européen des brevets

(19)

(11) Numéro de publication: **0 139 591**
**B1**

(12) # FASCICULE DE BREVET EUROPÉEN

(45) Date de publication du fascicule du brevet:
13.01.88

(51) Int. Cl.⁴: **B 60 P 3/34,** B 60 J 7/16

(21) Numéro de dépôt: 84402082.6

(22) Date de dépôt: 16.10.84

(54) Dispositif repliable destiné à la surélévation d'un véhicule ou d'un habitacle.

(30) Priorité: 17.10.83 FR 8316491

(43) Date de publication de la demande:
02.05.85 Bulletin 85/18

(45) Mention de la délivrance du brevet:
13.01.88 Bulletin 88/2

(84) Etats contractants désignés:
AT BE CH DE FR GB IT LI LU NL

(56) Documents cité:
DE-A-2 840 487
FR-A-2 202 794
FR-A-2 339 521
US-A-3 212 813
US-A-4 262 956

(73) Titulaire: **Lando, Georges Alain, 25 Avenue de Romans, F-38360 Sassenage (FR)**

(72) Inventeur: **Lando, Georges Alain, 25 Avenue de Romans, F-38360 Sassenage (FR)**

(74) Mandataire: **Casalonga, Axel, BUREAU D.A. CASALONGA OFFICE JOSSE & PETIT Morassistrasse 8, D-8000 München 5 (DE)**

## Description

La présente invention concerne un dispositif repliable destiné à la surélévation d'un véhicule ou d'un habitacle.

On connaît différents dispositifs repliables qui sont destinés à la surélévation d'un véhicule de manière à augmenter la hauteur disponible à l'intérieur du véhicule en cas de besoin. On en connaît en particulier un qui comprend un panneau formant toit dont l'un des bords est articulé sur le toit du véhicule, deux panneaux triangulaires dont l'un de leurs bords est articulé sur le toit du véhicule et un panneau transversal rectangulaire dont l'un de ses bords est articulé sur le toit du véhicule, ces trois derniers panneaux formant les parois latérales du dispositif de surélévation étant rabattables indépendamment. On en connaît également d'autres en particulier par les brevets FR-A-2 202 794, US -A-4 262 956 et US-A-3 212 813 qui sont en position dépliée en forme de parallélipipèdes et dont les quatres parois latérales sont rabattables indépendamment les unes des autres.

Ces dispositifs connus présentent de nombreux inconvénients. En particulier, l'étanchéité entre leurs panneaux longitudinaux et leurs panneaux transversaux est réalisée uniquement par contact si bien que toute déformation engendre des fuites. De plus, lorsqu'ils sont en position repliée, la face extérieure de certains de leurs panneaux vient en appui contre la face intérieure d'autres panneaux si bien que le revêtement décoratif intérieur risque d'être endommagé rapidement.

La présente invention, qui vise à éliminer les inconvénients de l'état de la technique, propose un dispositif repliable destiné à la surélévation d'un véhicule ou d'un habitacle dont la structure autorise son dépliage ou son repliage de manière simple et permet de le rendre étanche sans difficulté particulière.

Un dispositif repliable connu par exemple du brevet US-A-32 12 813, destiné à la surélévation d'un véhicule ou d'un habitacle, dont les parois latérales sont formées par des panneaux repliables vers l'intérieur et dont le toit est formé par un couvercle susceptible d'être abaissé lors du repliage desdits panneaux et relevé lors du dépliage de ces panneaux, comprend deux panneaux longitudinaux situés l'un en face de l'autre et présentant respectivement un bord longitudinal, montés de manière articulée sur le véhicule, et à l'une de leurs extrémités situées l'une en face de l'autre un second bord adjacent à leur bord longitudinal et un panneau transversal présentant deux bords opposés.

Le dispositif conforme à la présente invention est tel qu'il comprend en outre deux panneaux intermédiaires présentant respectivement un premier et un second bords convergents, les premiers bords de ces panneaux intermédiaires étant montés de manière articulée respectivement sur lesdits seconds bords desdits panneaux longitudinaux de telle sorte que leur premier et second bords convergent vers l'extrémité des bords longitudinaux desdits panneaux longitudinaux, les bords opposés dudit panneau transversal étant montés de manière articulée respectivement sur les seconds bords desdits panneaux intermédiaires, de telle sorte que lesdits panneaux intermédiaires sont respectivement portés par lesdits panneaux longitudinaux et ledit panneau transversal est porté par lesdits panneaux intermédiaires, et que simultanément, lesdits panneaux longitudinaux, en se déplaçant l'un vers l'autre, et ledit panneau transversal peuvent être rabattus vers l'intérieur, la face extérieure desdits panneaux intermédiaires se rabattant vers la face extérieure desdits panneaux longitudinaux et leur face intérieure se rabattant vers la face intérieure dudit panneau transversal, en vue d'atteindre une position repliée, ces panneaux étant susceptibles d'être déployés en se déplaçant en sens inverse, en vue d'atteindre une position dépliée.

Dans une variante de réalisation, le bord transversal dudit couvercle opposé audit panneau transversal est monté de manière articulée sur ledit véhicule et des moyens sont montés entre ce couvercle et ledit panneau transversal, moyens qui sont adaptés pour que ledit couvercle se déplace verticalement en pivotant autour de son bord transversal articulé, simultanément aux mouvements de repliage et de dépliage desdits panneaux. Les moyens de liaison entre ledit couvercle et ledit panneau transversal peuvent avantageusement être formés par des biellettes dont les extrémités sont articulées respectivement sur ledit couvercle et ledit panneau transversal, à l'extérieur de ce panneau transversal, ces biellettes s'étendant à l'intérieur dudit couvercle lorsque ce dernier est en position basse.

Dans une autre variante de réalisation, le dispositif repliable selon la présente invention comprend en outre:
- un second panneau transversal qui présente deux bords opposés ainsi que deux autres panneaux intermédiaires qui présentent respectivement un premier et un second bord convergents, les premiers et second bords desdits autres panneaux intermédiaires étant respectivement montés de manière articulée sur deux autres seconds bords desdits panneaux longitudinaux, adjacents à l'autre extrémité de leurs bords longitudinaux et sur lesdits bords opposés dudit second panneau transversal de manière que les premier et second bords desdits autres panneaux intermédiaires convergent vers lesdites autres extrémités des bords longitudinaux desdits panneaux longitudinaux, de telle sorte que ces autres panneaux intermédiaires sont portés par lesdits panneaux longitudinaux et ce second panneau transversal est porté par ces autres panneaux intermédiaires, et que ces autres panneaux intermédiaires et ce second panneau transversal se replient et se déplient de la même manière et conjointement aux précédents.

Dans cette variante de réalisation, le dispositif selon la présente invention comprend de préférence des moyens montés entre ledit couvercle et lesdits panneaux transversaux et adaptés pour que ledit couvercle se déplace verticalement simultanément aux mouvements de repliage et de dépliage desdits panneaux, ces moyens de liaison entre ledit couvercle et lesdits panneaux transversaux étant de préférence fomés par des coulisseaux portés par lesdits panneaux transversaux et qui coopérent avec des glissières longitudinales montées sur ledit couvercle.

Ledit couvercle est de préférence en forme de cuvette, la partie supérieure desdits panneaux venant en appui contre la face intérieure des parois périphériques dudit couvercle lorsque lesdits panneaux sont en position dépliée et le couvercle en position haute, des moyens de verrouillage dans sa position dépliée étant prévus entre lesdits panneaux longitudinaux et ledit couvercle. Comme dans la variante précédente, lesdits moyens de liaison pourraient également être fomés par des biellettes reliant les panneaux transversaux au couvercle, à l'intérieur.

Le bord inférieur périphérique dudit couvercle, dans sa position basse, s'étend au voisinage de la paroi du véhicule ou y est en contact et un joint d'étanchéité périphérique est prévu entre ce bord dudit couvercle et la paroi du véhicule, lesdits panneaux s'étendant en-dessous de ce couvercle.

Un joint d'étanchéité périphérique est prévu entre lesdits panneaux et ledit couvercle, pour créer une étanchéité lorsque ces panneaux sont à leur postition dépliée et le couvercle à sa position haute.

Des joints d'étanchéité sont prévus entre les bords adjacents desdits panneaux et des joints d'étanchéité sont prévus entre les bords inférieurs desdits panneaux et le véhicule.

Le dispositif repliable comprend de préférence des moyens d'actionnement permettant de déplacer ledit couvercle dans le sens vertical, ces moyens d'actionnement pouvant avantageusement être formés par des vérins pneumatiques montés entre ledit couvercle et le véhicule, ces vérins s'étendant à l'intérieur du couvercle lorsque ce dernier est en position basse.

Le dispositif repliable comprend de préférence un support en forme de couvercle intermédiaire entre lesdits panneaux longitudinaux et transversaux et le véhicule et fixé sur le bord d'une ouverture ménagée dans la paroi du véhicule.

Les angles entre les bords longitudinaux desdits panneaux longitudinaux et leur(s) second(s) bord(s) ainsi que les angles entre le premier et le second bords desdits panneaux intermédiaires sont égaux et que lesdits bords opposés desdits panneaux transversaux sont parallèles. Ainsi, en position repliée, lesdits panneaux peuvent être en appui les uns sur les autres.

La présente invention sera mieux comprise à l'étude de deux dispositifs repliables destinés à la surélévation de véhicules, décrits à titre d'exemples non limitatifs et illustrés par le dessin sur lequel:

- la figure 1 représente une vue de côté en élévation, son couvercle étant partiellement coupé, d'une première variante de réalisation d'un dispositif selon la présente invention en position dépliée;

- la figure 2 représente une vue en bout et en élévation du dispositif représenté sur la figure 1, le couvercle étant partiellement coupé;

- la figure 3 représente une coupe partielle selon III-III de la figure 1, le dispositif étant, dans cette figure, en position repliée;

- la figure 4 montre une coupe partielle agrandie selon IV-IV du dispositif représenté sur la figure 1;

- la figure 5 représente une coupe partielle agrandie selon V-V du dispositif représenté sur la figure 1;

- la figure 6 représente une vue de côté en élévation, son couvercle étant partiellement coupé, d'une autre variante de réalisation d'un dispositif selon la présente invention en position dépliée;

- la figure 7 représente une vue en bout et en élévation du dispositif représenté sur la figure 6, le couvercle étant partiellement coupé;

- et la figure 8 montre en coupe partielle agrandie selon VIII-VIII du dispositif représenté sur la figure 7.

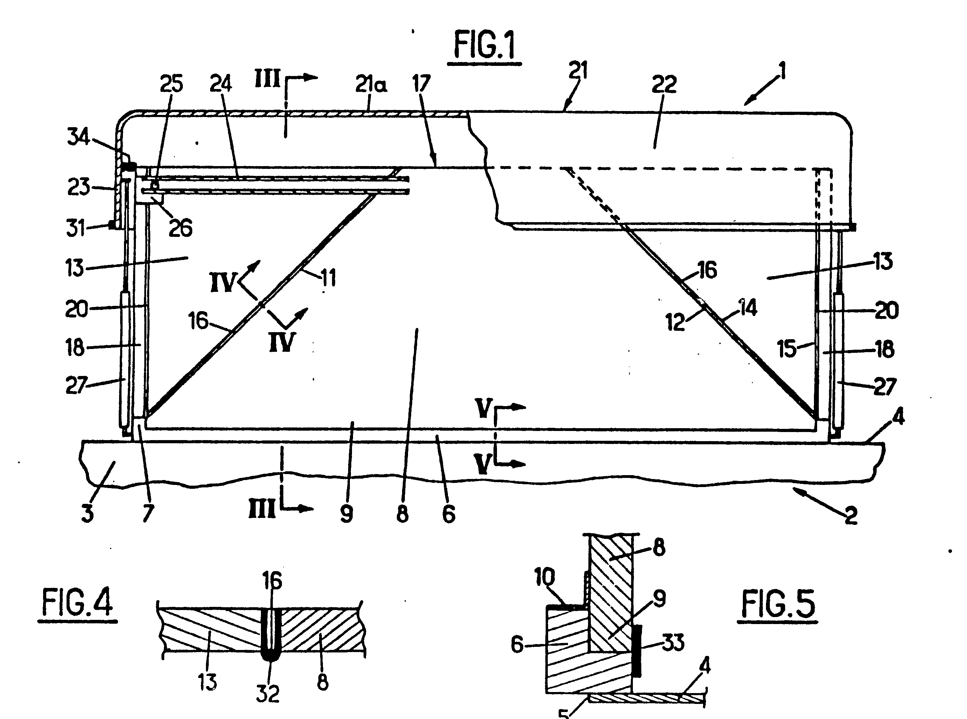

Le dispositif repliable représenté sur les figures 1 à 5 et repéré d'une manière générale par la référence 1 est destiné à la surélévation d'un véhicule 2 dont a a représenté sur le dessin uniquement son toit 3 qui, dans l'exemple représenté, présente une paroi supérieure horizontale 4 plane.

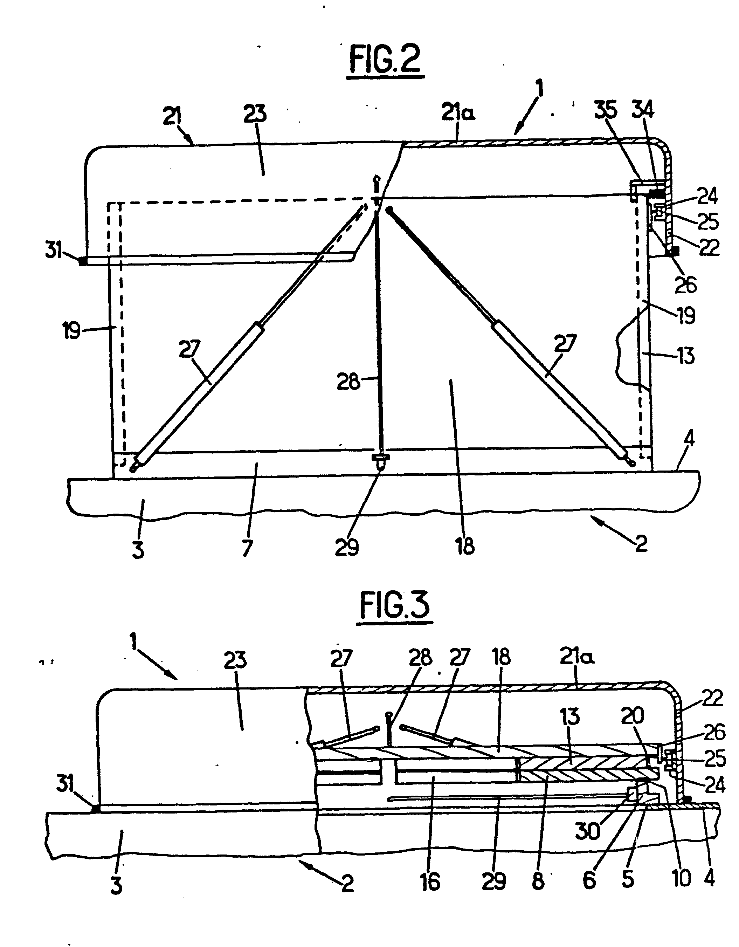

Comme on peut le voir sur la figure 3, la paroi 4 du toit 3 présente une ouverture rectangulaire 5.

Le dispositif 1 comprend tout d'abord un support intermédiaire de forme rectangulaire comprenant deux longerons 6 qui sont fixés sur deux bords opposés de l'ouverture 5 et deux traverses 7 qui sont fixées sur les deux autres bords opposés de l'ouverture 5.

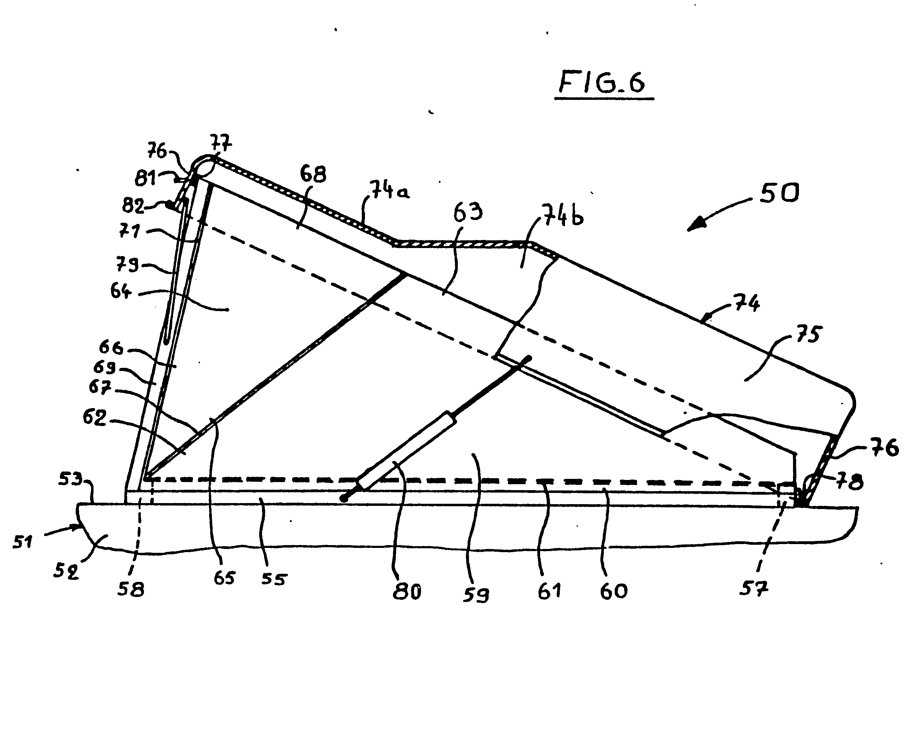

Comme on peut le voir en particulier sur la figure 1, le dispositif 1 comprend deux panneaux longitudinaux 8 qui présentent des bords longitudinaux inférieurs 9 respectivement montés de manière articulée sur les longerons 6 par l'intermédiaire de charnières 10, comme le montre de manière agrandie la figure 5.

Comme on peut le voir sur la figure 1, les panneaux longitudinaux 8 sont de forme trapézoïdale et présentent deux bords opposés 11 et 12 qui s'étendent à partir des extrémités du bord inférieur longitudinal 9, à 45° par rapport à ce dernier.

Le dispositif 1 comprend également quatre panneaux triangulaires identiques 13 dont la base 14 et le côté adjacent 15 à cette base forment un angle égal à 45°.

Deux panneaux intermédiaires 13 sont associés à chacun des panneaux longitudinaux 8 de telle sorte que leurs bords 14 soient articulés sur leurs bords 11 et 12 par l'intermédiaire de charnières 16 et que leurs coins situés entre leurs bords 14 et 15 soient adjacents aux bords longitudinaux 9 des panneaux longitudinaux 8. De plus, comme on peut le voir sur la figure 1, lorsque les panneaux longitudinaux 8 et les panneaux intermédiaires 13 qu'ils portent sont dans le même plan, ils déterminent, dans l'exemple représenté, des parois rectangulaires reprérées d'une manière générale par la référence 17.

Le dispositif 1 comprend également deux panneaux transversaux 18 qui, comme on peut le voir sur la figure 2, sont dans l'exemple représenté rectangulaires, ces panneaux transversaux 18 présentant deux bords opposés parallèles 19 qui sont montés de manière articulée, par l'intermédiaire de charnières 20, sur les bords 15 des panneaux intermédiaires 13 situés l'un en face de l'autre et portés par les panneaux longitudinaux 8. Les bords 19 des panneaux transversaux 18 ont sensiblement la même longueur que les bords 15 des panneaux intermédiaires 13.

Comme on peut le voir sur les figures 1 et 2 qui montrent le dispositif 1 dans sa position dépliée comme on le verra plus loin, les panneaux longitudinaux 8 s'étendent dans le même plan que les panneaux intermédiaires 13 qu'ils portent, si bien que les panneaux transversaux 18 et les parois rectangulaires 17 sont verticaux et déterminent un parallélépipède rectangle.

Le dispositif 1 comprend également un couvercle repéré d'une manière générale par la référence 21 qui est en forme de cuvette de section rectangulaire et qui présente des parois longitudinales 22 et des parois transversales 23. Ce couvercle 23 est disposé de telle sorte que son fond 21a s'étende horizontalement et que ses parois latérales 22 et 23 s'étendent à l'extérieur et à distance de la partie supérieure desdits panneaux lorsque ces derniers sont dans ladite position dépliée et délimitent un parallélépipède rectangle, comme on peut le voir sur les figures 1 et 2.

Sur la face intérieure des parois longitudinales 22 du couvercle 21 sont montées quatre glissières longitudinales 24 dans lesquelles sont respectivement disposés quatre galets 25 qui sont portés, par l'intermédiaire de plaque 26, par la partie supérieure des bords 19 des panneaux transversaux 18 et qui s'étendent de manière décalée vers l'intérieur par rapport aux panneaux 18, latéralement aux parois 17.

Le dispositif 1 comprend également des vérins 27 qui sont actifs dans un seul sens et qui ont pour but de déplacer le couvercle 21 vers le haut. Dans l'exemple représenté, on a prévu deux vérins 27 s'étendant à l'extérieur des panneaux transversaux 18 et qui sont fixés de manière articulée d'une part sur la face intérieure des parois transversales 23 du couvercle 21 et d'autre part sur les traverses 7, ces vérins s'étendant dans des plans verticaux.

En vue de déplacer le couvercle 21 vers le bas, le dispositif 1 comprend deux câbles 28 dont les extrémités sont fixées respectivement sur la face intérieure des parois transversales 23 du couvercle 21, en leur milieu, et qui s'étendent à l'extérieur des panneaux transversaux 18 pour être par la suite portées par des gaines 29 qui s'étendent au travers des traverses 7 et qui longent, par l'intérieur, ces traverses 7 ainsi que l'un des longerons 5 pour atteindre un treuil ou moulinet 30 représenté schématiquement sur la figure 3, ce treuil 30 étant accessible par l'intérieur du véhicule 2.

On va maintenant décrire comment fonctionne le dispositif 1 représenté sur les figures 1 à 5.

Comme on l'a vu précédemment et comme on peut le voir sur les figures 1 et 2, le dispositif 1 délimite un espace intérieur de forme sensiblement parallélépipédique qui s'étend au-dessus de l'ouverture 5 du toit 4 du véhicule et qui surélève l'habitacle de ce véhicule de la hauteur qui sépare le toit 4 de la paroi 21a formant le fond du couvercle 21, les parois latérales de cet espace de surélévation étant formées longitudinalement par les panneaux longitudinaux 8 et les panneaux intermédiaires 13 et transversalement par les panneaux transversaux 18 ainsi que par la partie des parois latérales 22 et 23 du couvercle 21 adjacentes à son fond 21a.

En manoeuvrant le treuil 30, on peut tirer les câbles 28 de manière à déplacer le couvercle 21 à l'encontre des vérins 27. Le couvercle 21 étant déplacé vers le bas, les panneaux longitudinaux 8 se rabattent vers l'intérieur l'un vers l'autre en pivotant autour des charniéères 10, les panneaux transversaux 18 se rabattent l'un vers l'autre vers l'intérieur et les panneaux intermédiaires 13 se rabattent de telle sorte que leur face extérieure se dirige vers la face extérieure des panneaux longitudinaux 8 et que leur face intérieure se rabatte vers la face intérieure des panneaux transversaux 18, par pivotement autour des charnières 16 et 20, tandis que les galets 25 se déplacent dans les glissières 24 en se rapprochant deux à deux.

En fin de course, les panneaux longitudinaux 8, les panneaux longitudinaux 13 et les panneaux transversaux 18 sont disposés horizontalement et sont empilés de la manière suivante. Les deux panneaux 13 que portent les panneaux longitudinaux 8 a s'étendent au-dessus des panneaux longitudinavx 8 et les panneaux transversaux 18 s'étendent au-dessus des panneaux intermédiaires 13 qui leur sont respectivement reliés tandis que les bords inférieurs des parois 22 et 23 du couvercle 21 viennent au voisinage ou sont en contact avec la face extérieure du toit 4 du véhicule, autour du support intermédiaire formé par les longerons 6 et les traverses 7. Cette position repliée est représentée sur la figure 3.

Comme on peut le voir sur cette figure 3, les vérins 27 occupent une position inclinée et s'étendent, comme les câbles 28, à l'intérieur du couvercle 21.

Pour déplier le dispositif 1 à partir de cette position repliée, il suffit de relâcher le treuil 30. Alors, les vérins 27 poussent le couvercle 21 vers le haut et, grâce aux glissières 24 et aux galets 25, les panneaux 8, 13 et 18 se déploient en se déplaçant en sens inverse des sens mentionnés ci-dessus de manière à revenir à leur position initiale dépliée.

De manière que le dispositif 1, dans sa position repliée, visible sur la figure 3, soit parfaitement étanche, le bord inférieur des parois 22 et 23 du couvercle 21 est muni d'un joint périphérique 31 créant une étanchéité entre ce couvercle 21 et la face extérieure du toit 4 du véhicule 2.

En se reportant à la figure 4, on voit que les bords adjacents des panneaux longitudinaux 8 et des panneaux intermédiaires 13 sont reliés par des joints d'étanchéité 32 qui sont fixés sur ces panneaux en même temps que les charnières 1 6. Des joints d'étanchéité équivalents sont prévus entre les bords adjacents des panneaux intermédiaires 13 et des panneaux transversaux 18, mais ne sont pas visibles sur les figures.

En se reportant à la figure 5, on voit que les bords inférieurs 9 des panneaux longitudinaux 8 portent des joints d'étanchéité linéaires 33 qui, lorsque ces panneaux 8 sont en position dépliée, créent une étanchéité entre ces panneaux longitudinaux 8 et les longerons 6. Des joints d'étanchéité identiques sont prévus entre le bord inférieur des panneaux transversaux 8 et les traverses 7, ces joints d'étanchéité n'étant pas visibles sur les figures.

En se reportant aux figures 1 et 2, on voit que la face intérieure des parois latérales 22 et 23 du couvercle 21 porte un joint d'étanchéité périphérique 34 qui crée une liaison étanche entre les bords supérieurs des panneaux 8, 13 et 18 et le couvercle lorsque le dispositif 1 est en position dépliée.

En vue du maintien de ces panneaux en appui contre ce joint d'étanchéité 34 et en vue de maintenir ces panneaux dans leur position dépliée, on voit sur la figure 2 qu'on a prévu des systèmes de verrouillage 35 constitués par exemple par des crochets qui empêchent les bords supérieurs des panneaux longitudinaux 8 de s'éloigner des parois latérales 22 du couvercle 21.

Grâce aux joints d'étanchéité 32, 33 et 34 et grâce aux systèmes de verrouillage 35, le dispositif 1 est, dans sa position dépliée, complètement étanche et indéformable.

En se reportant aux figures 6 à 8, on va maintenant décrire un dispositif repliable simplifié repéré d'une manière générale par la référence 50 qui est destiné à la surélévation d'un véhicule 51 dont on a représenté sur le dessin uniquement son toit 52 qui présente, dans l'exemple représenté, une paroi supérieure horizontale 53 plane dans laquelle est ménagée, comme précédemment, une ouverture rectangulaire 54.

Le dispositif 50 comprend un support intermédiaire en forme de cadre rectangulaire qui comprend deux longerons 55 et 56 qui sont fixés sur deux bords opposés de l'ouverture 54 et deux traverses 57 et 58 qui sont fixées sur les deux autres bords opposés de l'ouverture 54.

Le dispositif 1 comprend deux panneaux longitudinaux 59 qui présentent des bords longitudinaux inférieurs 60 respectivement montés de manière articulée sur les longerons 55 et 56 par l'intermédiaire de charnières 61, le montage de ces panneaux longitudinaux 59 sur les longerons 55 et 56 étant le même que celui des panneaux longitudinaux 8 sur les longerons 6 de l'exemple précédent représenté de manière agrandie sur la figure 5.

Les panneaux 59 sont sensiblement de forme triangulaire et présentent deux autres bords 62 et 63 qui forment un angle obtus, les bords 62 de ces panneaux longitudinaux 59 convergeant vers les extrémités des longerons 55 et 56 situées du côté de la traverse 58.

Le dispositif 50 comprend également deux panneaux intermédiaires identiques 64 qui sont de forme triangulaire et qui présentent deux bords adjacents 65 et 66 qui forment un angle égal à l'angle formé par les bords 60 et 62 des panneaux longitudinaux 59.

Les bords 65 des panneaux intermédiaires 64 sont articulés sur les bords 62 des panneaux longitudinaux 59 par l'intermédiaire de charnière 67. Lorsque les panneaux longitudineux 59 et les panneaux transversaux 64 sont respectivement dans le même plan, les troisièmes bords 68 des panneaux intermédiaires 64 sont sensiblement en alignement avec les bords 63 des panneaux longitudinaux 59 de telle sorte qu'ils forment respectivement sensiblement des triangles.

Le dispositif 50 comprend également un panneau transversal 69 qui est dans l'exemple représenté rectangulaire et dont deux bords opposés 70 sont montés de manière articulée respectivement sur les bords 66 des panneaux intermédiaires 64 par l'intermédiaire de charnières 71.

Les charnières 67 et 71 sont montées de la même manière que les charnières 16 visibles sur la figure 4 de l'exemple précédent.

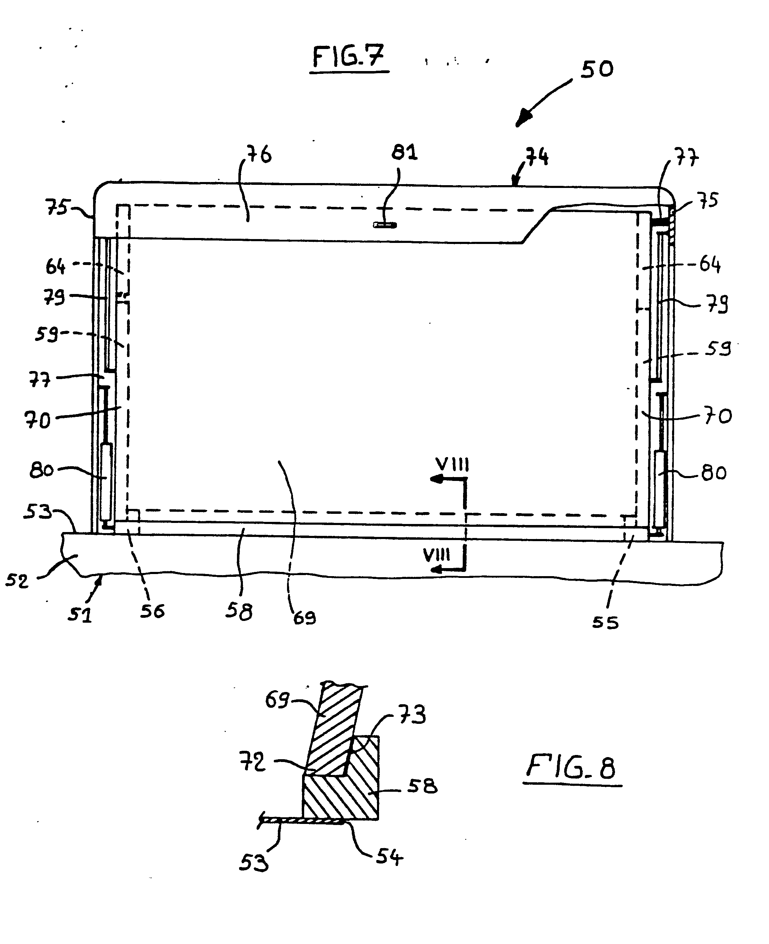

Lorsque les panneaux longitudinaux 59 et les panneaux intermédiaires 64 sont en alignement, le bord inférieur 72 vient en appui contre la traverse 58 par l'intermédiaire d'un joint d'étanchéité 73 comme on peut le voir sur la figure 8 et comme ce fut le cas pour les panneaux transversaux 18 de l'exemple précédent, le panneau transversal 69 formant, dans cette position, avec le bord inférieur 60 des panneaux longitudinaux 59 un angle aigu.

Le dispositif 50 comprend également un couvercle repéré d'une manière générale par la référence 74 qui est en forme de couvercle de section rectangulaire et qui présente des parois longitudinales 75 et des parois transversales 76. Comme dans l'exemple précédent, les parois latérales du couvercle 74 entourent la partie supérieure des panneaux longitudinaux 59, des panneaux intermédiaires 64 et du panneau transversal 69 qui viennent en appui contre leur face intérieure par l'intermédiaire d'un joint d'étanchéité 77 lorsque ces panneaux sont en position dépliée dans laquelle les panneaux longitudinaux 59 et les panneaux intermédiaires 64 sont alignés, le couvercle 74 étant alors en position haute, tandis qu'en position repliée, le bord inférieur des parois périphériques du couvercle 74 viennent en appui contre la face supérieure 53 du véhicule 51, autour et à distance des longerons 55 et 56 et des traverses 57 et 58.

La paroi transversale 76 du couvercle 74 opposée à la paroi transversale 69 et adjacente à la traverse 57 est montée, par son bord inférieur, sur cette traverse 57 par l'intermédiaire d'une charnière transversale 78 autour de laquelle il peut pivoter. Le couvercle 74 est lié au panneau transversal 69 par l'intermédiaire de deux biellettes 79 dont les extrémités sont respectivement articulées, transversalement, sur les bords opposés 70 du panneau transversal 69 et sur les parois longitudinales 75 du couvercle 74 au voisinage de sa paroi transversale 76, à l'intérieur. En outre, sont prévus deux vérins pneumatiques 80 dont les extrémités sont montées de manière articulée, transversalement, entre les longerons 55 et 56 et la face intérieure des parois longitudinales 75 du couvercle 74.

Dans sa position dépliée visible sur les figures 6 et 7, le dispositif 50 est tel que le couvercle 74 est incliné en direction de la traverse 57, les panneaux longitudinaux 59 et les panneaux intermédiaires 54 sont alignés et le panneau transversal 69 s'étend vers le haut, la partie supérieure de ces panneaux s'étendant à l'intérieur du couvercle 74 et étant en appui contre la face intérieure de trois de ses parois latérales par l'intermédiaire du joint d'étanchéité 77, le dispositif 50 étant maintenu dans cette position par des systèmes de verrouillage non représenté qui maintient les panneaux longitudinaux 59 contre les parois longitudinales 75 du couvercle 74 et qui peut être constitué par le système de verrouillage 35 de l'exemple précédent.

En libérant ces systèmes de verrouillage, on peut replier le dispositif 50 de la manière suivante. En tirant vers le bas sur la poignée 81 prévue sur la face extérieure de la paroi transversale 76 du couvercle 74 adjacente à la paroi transversale 69, on fait pivoter le couvercle 74 vers le bas autour de sa charnière 78, en exerçant des forces à l'encontre des vérins pneumatiques 80. Ce faisant, les panneaux 59, 64 et 69 effectuent des mouvements conjointement au couvercle 64 grâce aux biellettes 79 de la manière suivante. Les panneaux longitudinaux 59 et le panneau transversal 69 se rabattent vers l'intérieur tandis que la face extérieure des panneaux intermédiaires 64 se rabat vers la face extérieure des panneaux longitudinaux 59 et que la face intérieure des panneaux intermédiaires 64 se rabat vers la face intérieure du panneau transversal 69. Lorsque le couvercle 74 est complètement rabattu et atteint sa position basse dans laquelle le bord de ses parois périphériques 75 et 76 est en appui contre la face supérieure 53 du toit du véhicule 51, les panneaux intermédiaires 64 sont en appui sur les panneaux longitudinaux 59 et le panneau transversal 69 est en appui sur les panneaux intermédiaires 64 et se trouve dans une position équivalente à celle du dispositif de l'exemple précédent tel que représenté sur la figure 3, les biellettes 79 et le vérin 80 étant à l'intérieur du couvercle 74 dont le bord périphérique intérieur porte sur le toit 53 du véhicule 51 par l'intermédiaire d'un joint d'étanchéité périphérique 82 visible sur la figure 6.

En vue du maintien du dispositif 50 dans cette position repliée, on peut prévoir un système de verrouillage quelconque connu agissant par exemple entre la traverse 59 et la paroi transversale 76 du couvercle 50 portant la poignée 81, ce système n'étant pas représenté sur les figures.

En vue de remettre le dispositif 50 dans sa position dépliée, il suffit de libérer le couvercle 50. Les vérins pneumatiques 80 agissent sur le couvercle 74 de manière à le faire pivoter vers le haut autour de sa charnière 78, ce couvercle 74 tirant vers le haut les panneaux 59, 64 et 69 grâce aux biellettes 79 de telle sorte que ces panneaux 59, 64 et 69 et le couvercle 74 se remettent dans leur position représentée sur les figures 6 et 7, le dispositif 50 pouvant être de nouveau verrouillé en position dépliée grâce aux systèmes de verrouillage agissant entre les panneaux longitudinaux 59 et les parois longitudinales 75 du couvercle 74.

Comme on peut le voir sur la figure 6, la paroi formant toit 74a du couvercle 74 présente une partie renflée vers le haut 74b sur sensiblement la moitié de sa longueur à partir de sa paroi transversale 76 portant la charnière 78 de manière à augmenter dans la partie la plus basse du couvercle 74 en position dépliée une hauteur disponible plus grande.

La présente invention ne se limite pas aux dispositif de surélévation décrits ci-dessus. En effet, on aurait pu très bien prévoir des dispositifs de forme générale différente lorsqu'ils sont en position dépliée, des dispositifs susceptibles de s'adapter sur des toits de véhicule de forme quelconque en prenant soin de modifier la forme du couvercle, des moyens d'actionnement du couvercle et des panneaux différents ou disposés dans des endroits différents, des moyens de liaison entre le couvercle et les panneaux différents ou disposés en des endroits différents. Bien entendu, les panneaux peuvent présenter des ouvertures.

## Revendications

1. Dispositif repliable (1; 50) destiné à la surélévation d'un véhicule ou d'un habitacle, dont les parois latérales sont formées par des panneaux repliables vers l'intérieur et dont le toit est formé par un couvercle (74) susceptible d'être rabaissé lors du repliage des panneaux et relevé lors du dépliage de ces panneaux comprenant deux panneaux longitudinaux (8 ; 59) situés l'un en face de l'autre et présentant respectivement un bord longitudinal (9 ; 60), montés de manière articulée (10 ; 61) sur le véhicule, et à l'une de leurs extrémités situées l'une en face de l'autre un second bord (11 ; 62) adjacent à leur bord longitudinal et un panneau transversal (18 ; 69) présentant deux bords opposés (9 ; 70) caractérisé par le fait qu'il comprend en outre deux panneaux intermédiaires (13 ; 64) présentant respectivement un premier et un second bords convergents, les premiers bords (14 ; 65) de ces panneaux intermédiaires étant montés de manière articulée (16 ; 67) respectivement sur lesdits seconds bords (11 ; 62) desdits panneaux longitudinaux (8 ; 59) de telle sorte que leurs premier et second bords convergent vers l'extrémité correspondante des bords longitudinaux (9 ; 60) desdits panneaux longitudinaux (8 ; 59) et que les bords opposés (19 ; 70) dudit panneau transversal (18 ; 69) sont montés de manière articulée (20 ; 71) respectivement sur les seconds bords (15 ; 66) desdits panneaux intermédiaires (13 ; 64) de telle sorte que lesdits panneaux intermédiaires (13 ; 64) sont respectivement portés en position repliée par lesdits panneaux longitudinaux (8 ; 59) et ledit panneau transversal (18 ; 69) est porté par lesdits panneaux intermédiaires (13 ; 64), et que, simultanément, lesdits panneaux longitudinaux (8 ; 59), en se déplaçant l'un vers l'autre, et ledit panneau transversal (18 ; 69) peuvent être rabattus vers l'intérieur, la face extérieure desdits panneaux intermédiaires (13 ; 64) se rabattant vers la face extérieure desdits panneaux longitudinaux (8 ; 59) et la face intérieure des panneaux intermédiaires se rabattant vers la face intérieure dudit panneau transversal (18 ; 69), en vue d'atteindre une position repliée, tous ces panneaux étant susceptibles d'être déployés en se déplaçant en sens inverse, en vue d'atteindre une position dépliée.

2. Dispositif selon la revendication 1, caractérisé par le fait que le bord tranversal (76) dduit couvercle (74) opposé audit panneau transversal (69) est monté de manière articulée (78) sur le véhicule et que des moyens (79) sont montés entre ce couvercle (74) et ledit panneau transversal (69), moyens qui sont adaptés pour que ledit couvercle se déplace verticalement en pivotant autour de son bord transversal articulé (76) simultanément aux mouvements de repliage et de dépliage desdits panneaux.

3. Dispositif selon la revendication 1, caractérisé par le fait qu'il comprend en outre un second panneau transversal (18) qui présente deux bords opposés (19) ainsi que deux autres panneaux intermédiaires (13) qui présentent respectivement un premier et un second bords convergents (14, 15), les premier et second bords desdits autres panneaux intermédiaires (13) étant respectivement montés de manière articulée sur deux autres seconds bords desdits panneaux longitudinaux (8), adjacents à l'autre extrémité de leurs bords longitudinaux (9) et sur lesdits bords opposés dudit second panneau transversal (18) de manière que les premier et second bords (14, 15) desdits autres panneaux intermédiaires convergent vers lesdites autres extrémités des bords longitudinaux desdits panneaux longitudinaux (8), de telle sorte que ces autres panneaux intermédiaires (13) sont portés par lesdits panneaux longitudinaux (8) et ce second panneau transversal (18) est porté par ces autres panneaux intermédiaires, et que ces autres panneaux intermédiaires et ce second panneau transversal se replient et se déplient de la même manière que dans le cas précédent.

4. Dispositif selon la revendication 3, caractérisé par le fait qu'il comprend des moyens (24, 25) montés entre ledit couvercle (21) et lesdits panneaux transversaux (18) et adaptés pour que ledit couvercle (21) se déplace verticalement simultanément aux mouvements de repliage et de dépliage desdits panneaux.

5. Dispositif selon l'une des revendications 2 et 4, caractérisé par le fait que lesdits moyens de liaison entre ledit couvercle (74) et le(s)dit(s) panneau(x) transversal(aux) (69) sont formés par des biellettes (79) dont les extrémités sont articulées respectivement sur ledit couvercle et ledit panneau transversal, à l'extérieur de ce panneau transversal, ces biellettes (79) s'étendant à l'intérieur dudit couvercle, lorsque ce dernier est en position basse.

6. Dispositif selon la revendication 4, caractérisé par le fait que lesdits moyens de liaison entre ledit couvercle (21) et lesdits panneaux transversaux (18) comprennent des galets (25) portés par lesdits panneaux transversaux (18) et qui coopèrent avec des glissières longitudinales (24) montées sur ledit couvercle (21).

7. Dispositif selon l'une quelconque des revendications précédentes, caractérisé par le fait que ledit couvercle (21 ; 74) est en forme de cuvette, la partie supérieure desdits panneaux venant en appui contre la face intérieure des parois périphériques dudit couvercle lorsque ces panneaux sont en position dépliée, et le couvercle en position haute, des moyens de verrouillage (35) dans sa position dépliée étant prévus entre lesdits panneaux longitudinaux (8 ; 59) et ledit couvercle (21 ; 74).

8. Dispositif selon l'une quelconque des revendications précédentes, caractérisé par le fait que, dans sa position basse, le bord inférieur périphérique dudit couvercle (21 ; 74) s'étend au voisinage de la paroi du véhicule ou y est en contact et qu'un joint d'étanchéité périphérique (31 ; 82) est prévu entre ce bord dudit couvercle et la paroi du véhicule, lesdits panneaux s'étendant en-dessous de ce couvercle.

9. Dispositif selon l'une quelconque des revendications précédentes, caractérisé par le fait qu'un joint d'étanchéité périphérique (34 ; 77) est prévu entre lesdits panneaux et ledit couvercle pour créer une étanchéité lorsque ces panneaux sont dépliés et le couvercle à sa position haute.

10. Dispositif selon l'une quelconque des revendications précédentes, caractérisé par le fait que des joints d'étanchéité (32) sont prévus entre les bords adjacents desdits panneaux et des joints d'étanchéité (33 ; 73) sont prévus entre les bords inférieurs desdits panneaux et le véhicule.

11. Dispositif selon l'une quelconque des revendications précédentes, caractérisé par le fait qu'il comprend des moyens d'actionnement (27 ; 80) permettant de déplacer ledit couvercle (21 ; 74) dans le sens vertical.

12. Dispositif selon la revendication 11, caractérisé par le fait que lesdits moyens d'actionnement sont formés par des vérins pneumatiques (27 ; 80) montés entre ledit couvercle (21 ; 74) et le véhicule, ces vérins s'étendant à l'intérieur dudit couvercle lorsque ce dernier est en position basse.

13. Dispositif selon l'une quelconque des revendications précédentes, caractérisé par le fait qu'il comprend un support en forme de cadre intermédiaire (6, 7) entre lesdits panneaux longitudinaux et transversaux et le véhicule qui est fixé sur le bord d'une ouverture (5 ; 54) ménagée dans la paroi du véhicule.

14. Dispositif selon l'une quelconque des revendications précédentes, caractérisé par le fait que les angles entre les bords longitudinaux (9 ; 60) desdits panneaux longitudinaux (8 ; 59) et leur(s) second(s) bord(s) (11 ; 62) ainsi que les angles entre les premier et second bords desdits panneaux intermédiaires (13 ; 64) sont égaux et que les bords opposés (19 ; 70) desdits panneaux transversaux (18 ; 69) sont parallèles.

**Patentansprüche**

Ausstellbare Vorrichtung (1, 50) zur Erhöhung eines Fahrzeuges oder eines Gehäuses, deren Seitenwände aus nach innen klappbaren Platten und dessen Dach aus einem beim Aufklappen der Platten senkbaren und beim Zusammenklappen dieser Platten anhebbaren Deckel (74) gebildet sind, mit zwei einander gegenüberliegenden und jeweils einen Längsrand (9, 60) aufweisenden, am Fahrzeug angelenkten (10, 61) Längsplatten (8, 59) mit einem an ihren Längsrand angrenzenden zweiten Rand (11, 62) an einem ihrer einander gegenüberliegenden Enden, und einer Querplatte (18, 69) mit zwei gegenüberliegenden Rändern (9, 70), dadurch gekennzeichnet, daß sie außerdem zwei Zwischenplatten (13, 64) mit jeweils einem ersten und einem zweiten konvergierenden Rand aufweist, wobei die ersten Ränder (14, 65) dieser Zwischenplatten jeweils an die zweiten Ränder (11, 62) der Längsplatten (8, 59) so angelenkt sind (16, 67), daß ihre ersten und zweiten Ränder zum entsprechenden Ende der Längsränder (9, 60) der Längsplatten (8, 59) konvergieren und daß die gegenüberliegenden Ränder (19, 70) der Querplatte (18, 69) jeweils an den zweiten Rändern (15, 66) der Zwischenplatten (13, 64) so angelenkt sind (20, 71), daß die Zwischenplatten (13, 64) jeweils in zusammengeklappter Stellung von den Längsplatten (8, 59) getragen werden und die Querplatte (18, 69) von den Zwischenplatten (13, 64) getragen wird, und daß gleichzeitig die Längsplatten (8, 59), indem sie sich gegeneinander verschieben, und die Querplatte (18, 69) nach innen umgeklappt werden können, wobei sich die Außenfläche der Zwischenplatten (13, 64) sich gegen die Außenfläche der Längsplatten (8, 59) umklappt und die Innenfläche der Zwischenplatten sich nach der Innenfläche der Querplatte (18, 69) im Hinblick auf das Einnehmen einer zusammengeklappten Stellung umklappt, wobei alle Platten durch Verschieben in die entgegengesetzte Richtung im Hinblick auf das Einnehmen einer aufgeklappten Stellung auseinanderklappbar sind.

2. Vorrichtung nach Anspruch 1, dadurch gekennzeichnet, daß der Querrand (76) des der Querplatte (69) gegenüberliegenden Deckels (74) am Fahrzeug angelenkt ist (78) und daß zwischen diesem Deckel (74) und der Querplatte (69) Mittel (79) montiert sind, welche so beschaffen sind, daß sich der Deckel vertikal unter Schwenken um seinen angelenkten Querrand (76) gleichzeitig mit den Zusammenklapp- und Aufklappbewegungen der Platten verschiebt.

3. Vorrichtung nach Anspruch 1, dadurch gekennzeichnet, daß sie außerdem eine zweite Querplatte (18) mit zwei gegenüberliegenden Rändern (19) sowie zwei andere Zwischenplatten (13) mit jeweils einem ersten und einem zweiten konvergierenden Rand (14, 15) aufweist, wobei die ersten und zweiten Ränder der anderen Zwischenplatten (13) jeweils an zwei andere Ränder der Längsplatten (8) angrenzend an das andere Ende ihrer Längsränder (9) und an die gegenüberliegenden Ränder der zweiten Querplatte (18) so angelenkt sind, daß die ersten und zweiten Ränder (14, 15) der anderen Zwischenplatten nach den anderen Enden der Längsränder der Längsplatten (8) konvergieren, so daß die anderen Zwischenplatten (13) von den Längsplatten (8) getragen werden und die zweite Querplatte (18) von den anderen Zwischenplatten getragen wird, und daß die anderen Zwischenplatten und die zweite Querplatte sich auf dieselbe Weise wie im vorhergehenden Fall zusammenklappen und aufklappen.

4. Vorrichtung nach Anspruch 9, dadurch gekennzeichnet, daß sie Mittel (24, 29) aufweist, welche zwischen dem Deckel (21) und den Querplatten (18) montiert sind und so beschaffen sind, daß sich der Deckel (21) vertikal gleichzeitig mit den zusammenklapp- und Aufklappbewegungen der Platten verschiebt.

5. Vorrichtung nach einem der Ansprüche 2 und 4, dadurch gekennzeichnet, daß die Mittel zur Verbindung zwischen dem Deckel (74) und der (den) Querplatte(n) (69) aus Schwingarmen (79) gebildet sind, deren Enden jeweils am Deckel und der Querplatte außerhalb dieser Querplatte angelenkt sind, wobei die Schwingarme (79) sich im Inneren des Deckels erstrecken, wenn sich dieser in tiefer Stellung befindet.

6. Vorrichtung nach Anspruch 4, dadurch gekennzeichnet, daß die Mittel zur Verbindung zwischen dem Deckel (21) und den Querplatten (18) Rollen (25) aufweisen, welche von den Querplatten (18) getragen werden und mit am Deckel (21) angebrachten Längsgleitschienen (24) zusammenwirken.

7. Vorrichtung nach einem der vorhergehenden Ansprüche, dadurch gekennzeichnet, daß der Deckel (21, 74) die Form einer Schale hat, wobei der Oberteil der Platten sich an der Innenseite der Umfangswände des Deckels abstützt, wenn die Platten in aufgeklappter Stellung sind und der Deckel in hoher Stellung ist, wobei Verriegelungsmittel (35) in seiner aufgeklappten Stellung zwischen den Längsplatten (8, 59) und dem Deckel (74) vorgesehen sind.

8. Vorrichtung nach einem der vorhergehenden Ansprüche, dadurch gekennzeichnet, daß in seiner tiefen Stellung der untere Umfangsrand des Deckels (21, 74) sich in der Nähe der Wand des Fahrzeuges erstreckt oder damit in Kontakt ist, und daß eine Umfangsdichtung (31, 82) zwischen diesem Rand des Deckels und der Wand des Fahrzeugs vorgesehen ist, wobei sich die Platten unterhalb dieses Deckels erstrecken.

9. Vorrichtung nach einem der vorhergehenden Ansprüche, dadurch gekennzeichnet, daß eine Umfangsdichtung (34, 77) zwischen den Platten und dem Deckel vorgesehen ist, um eine Abdichtung zu erzielen, wenn die Platten aufgeklappt sind und der Deckel in seiner hohen Stellung ist.

10. Vorrichtung nach einem der vorhergehenden Ansprüche, dadurch gekennzeichnet, daß die Dichtungen (32) zwischen den angrenzenden Rändern der Platten und daß Dichtungen (33, 73) zwischen den unteren Rändern der Platten und dem Fahrzeug vorgesehen sind.

11. Vorrichtung nach einem der vorhergehenden Ansprüche, dadurch gekennzeichnet, daß sie Betätigungsmittel (27, 80) umfaßt, welche das Verschieben des Deckels (21, 74) in vertikale Richtung erlauben.

12. Vorrichtung nach Anspruch 11, dadurch gekennzeichnet, daß die Betätigungsmittel aus pneumatischen Zylindern (27, 80) gebildet sind, welche zwischen dem Deckel und dem Fahrzeug montiert sind, wobei sich diese Zylinder im Inneren des Deckels erstrecken, wenn dieser letztere in tiefer Stellung ist.

13. Vorrichtung nach einem der vorhergehenden Ansprüche, dadurch gekennzeichnet, daß sie eine Stütze in Form eines Zwischenträgers (6, 7) zwischen den Längs- und Querplatten und dem Fahrzeug umfaßt, welcher am Rand einer in der Wand des Fahrzeugs angebrachten Öffnung (5, 54) befestigt ist.

14. Vorrichtung nach einem der vorhergehenden Ansprüche, dadurch gekennzeichnet, daß die Winkel zwischen den Längsrändern (9, 60) der Längsplatten (8, 59) und ihres (ihrer) zweiten Randes (Ränder) (11, 62) sowie die Winkel zwischen den ersten und den zweiten Rändern der Zwischenplatten (13, 64) gleich sind und daß die gegenüberliegenden Ränder (19,70) der Querplatten (18, 69) parallel sind.


**Claims**

1. Collapsible device (1 ; 50) intended for raising the height of a vehicle or housing, the side walls of which are formed by panels foldable inwards and the roof of which is formed by a cover (74) capable of being lowered during the folding of the panels and raised during the unfolding of these panels which comprise two longitudinal panels (8 ; 59) located opposite one another and having respectively one longitudinal edge (9 ; 60) mounted in an articulated manner (10 ; 61) on the vehicle and, at one of their ends located opposite one another, a second edge (11; 62) adjacent to their longitudinal edge, and a transverse panel (18 ; 69) having two opposite edges (9 ;70), characterized in that it also possesses two intermediate panels (13 ; 64) having respectively a first and a second convergent edge, the first edges (14, 65) of the these intermediate panels being mounted respectively in an articulated manner (16 ; 67) on the said second edges (11 ; 62) of the said longitudinal panels (8 ; 59), in such a way that their first and second edges converge towards the corresponding end of the longitudinal edges (9 ; 60) of the said longitudinal panels (8 ; 59), and in that the opposite edges (19 ; 70) of the said transverse panel (18 ; 69) are mounted respectively in an articulated manner (20 ; 71) on the second edges (15 ; 66) of the said intermediate panels (13 ; 64), in such a way that the said intermediate panels (13 ; 64) are respectively carried, in the folded position, by the said longitudinal panels (8 ; 59), and the said transverse panel (18 ; 69) is carried by the said intermediate panels (13 ; 64), and in that, simultaneously, the said longitudinal panels (8 ; 59), moving towards one another, and the said transverse panel (18 ; 69) can be turned down inwards, the outer face of the said intermediate panels (13 ; 64) turning down towards the outer face of the said longitudinal panels (8 ; 59), and the inner face of the intermediate panels turning down towards the inner face of the said transverse panel (18 ; 69), in order to reach a folded position, all these panels being capable of being unfolded by being moved in the opposite direction, in order to reach an unfolded position.

2. Device according to Claim 1, characterized in that the transverse edge (76) of the said cover (74) opposite the said transverse panel (69), is mounted on the vehicle in an articulated manner (78), and in that means (79) are mounted between this cover (74) and the said transverse panel (69) means designed to ensure that the said cover moves vertically, pivoting about its articulated transverse edge (76), simultaneously with the folding and unfolding movements of the said panels.

3. Device according to Claim 1, characterized in that it also possesses a second transverse panel (18) having two opposite edges (19), and two other intermediate panels (13) which respectively have a first and a second convergent edge (14, 15), the first and second edges of the said other intermediate panels (13) being mounted respectively in an articulated manner on two other second edges of the said longitudinal panels (8), adjacent to the other end of their longitudinal edges (9), and on the said opposite edges of the said second transverse panel (18), so that the first and second edges (14, 15) of the said other intermediate panels converge towards the said other ends of the longitudinal edges of the said longitudinal panels (8), in such a way that these other intermediate panels (13) are carried by the said longitudinal panels (8), and this second transverse panel (18) is carried by these other intermediate panels, and in that these other intermediate panels and this second transverse panel are folded and unfolded in the same way as in the preceding case.

4. Device according to Claim 3, characterized in that it possesses means (24, 25) mounted between the said cover (21) and the said transverse panels (18) and designed to ensure that the said cover (21) moves vertically simultaneously with the folding and unfolding movements of the said panels.

5. Device according to one of Claims 2 and 4, characterized in that the said connecting means between the said cover (74) and the said transverse panel or transverse panels (69) are formed by connecting rods (79), the ends of which are articulated respectively on the said cover and on the said transverse panel outside this transverse panel, these connecting rods (79) extending on the inside of the said cover when the latter is in the low position.

6. Device according to Claim 4, characterized in that the said connecting means between the said cover (21) and the said transverse panels (18) comprise rollers (25) which are carried by the said transverse panels (18) and which interact with longitudinal slideways (24) mounted on the said cover (21).

7. Device according to any one of the preceding claims, characterized in that the said cover (21 ; 74) is bowl-shaped, the upper part of the said panels coming up against the inner face of the peripheral walls of the said cover when these panels are in the unfolded position and the cover is in the high position, means (35) of locking it in its unfolded position being provided between the said longitudinal panels (8 ; 59) and the said cover (21 ; 74).

8. Device according to any one of the preceding claims, characterized in that, in its low position, the lower peripheral edge of the said cover (21 ; 74) extends near the wall of the vehicle or is in contact with it, and in that a peripheral gasket (31 ; 82) is provided between this edge of the said cover and the wall of the vehicle, the said panels extending underneath this cover.

9. Device according to any one of the preceding claims, characterized in that a peripheral gasket (34 ; 77) is provided between the said panels and the said cover, to ensure sealing when these panels are unfolded and, the cover is, in its high position.

10. Device according to any one of the preceding claims, characterized in that gaskets (32) are provided between the adjacent edges of the said panels, and gaskets (33 ; 73) are provided between the lower edges of the said panels and the vehicle.

11. Device according to any one of the preceding claims, characterized in that it possesses actuating means (27 ; 80) making it possible to move the said cover (21 ; 74) in the vertical direction.

12. Device according tp Claim 11, characterized in that the said actuating means are formed by pneumatic jacks (27 ; 80) mounted between the said cover (21 ; 74) and the vehicle, these jacks extending within the said cover when the latter is in the low position.

13. Device according to any one of the preceding claims, characterized in that it possesses a support in the form of an intermediate frame (6, 7) which is located between the said longitudinal and transverse panels and the vehicle and which is fastened to the edge of an orifice (5 ; 54) made in the wall of the vehicle.

14. Device according to any one of the preceding claims, characterized in that the angles between the longitudinal edges (9 ; 60) of the said longitudinal panels (8 ; 59) and their second edge or second edges (11 ; 62) and the angles between the first and second edges of the said intermediate panels (13 ; 64) are equal, and in that the opposite edges (19 ; 70) of the said transverse panels (18 ; 69) are parallel.

FIG.1

FIG.4

FIG.5

## FIG.2

## FIG.3

FIG.6

FIG.7

FIG. 8